# EUROPEAN PATENT SPECIFICATION

(11) **EP 0 520 708 B1**
(45) Date of publication and mention of the grant of the patent: **29.07.1998**
(21) Application number: 92305672.5
(22) Date of filing: 19.06.1992
(51) Int. Cl.: G06F 9/44, G06F 9/45

(54) **Method and apparatus for converting high level form abstract syntaxes into an intermediate form**
Verfahren und Gerät zum Umwandlen von abstrakten Syntaxen auf hohem Niveau in eine Zwischenform
Méthode et appareil pour convertir des syntaxes abstraites de haut niveau en une forme intermédiaire

(30) Priority: 28.06.1991 US 722651
(43) Date of publication of application: 30.12.1992
(73) Proprietor: DIGITAL EQUIPMENT CORPORATION, Maynard, MA 01754 (US)
(72) Inventor: Sumalwar, Kiran Kumar, Acton, Massachusetts 01720 (US)
(74) Representative: Goodman, Christopher

(56) References cited:
- EP-A- 0 243 110
- EP-A- 0 327 102
- DE-A- 3 518 139
- IEEE TRANSACTIONS ON SOFTWARE ENGINEERING, vol. 16, no. 10, October 1990, NEW YORK, US, pages 1209 - 1220 , XP162480 GERALD W. NEUFELD ET AL.: 'The Design and Implementation of an ASN.1-C Compiler'
- IBM TECHNICAL DISCLOSURE BULLETIN, vol. 26, no. 10A, March 1984, NEW YORK, US, pages 5301 - 5302 T.E. HINTZ ET AL.: 'Design of an incremental compiler and interactive interpreter utilizing a hybrid token-threaded code'

## Description

### FIELD OF THE INVENTION

The present invention relates generally to apparatus and methods for converting information from a high level of instruction encoding to an intermediate level of instruction encoding, and more particularly to apparatus and methods for converting high level form abstract syntaxes, also referred to as abstract type definitions which are described using the Abstract Syntax Notation One (ASN.1) data type specification language into an intermediate form. The intermediate form is then executed in an interpretive manner within application programs by a computing device and/or alternatively is re-converted into the original high level form abstract type definitions.

### BACKGROUND OF THE INVENTION

It is desirable to provide programming tools to computer programmers which provide the capability to write computer instructions in a high level form. The advantages associated with high level form programming instructions are provided by such well known high level programming languages as BASIC, PASCAL, FORTRAN, COBOL and C. From a programmer's perspective, high level form programming instructions are more human readable because they generally contain more concentrated program information and typically track our spoken language more closely than lower forms of encoded instructions. High level form programs are therefore easier to review. Furthermore, the more concentrated information enables a programmer to specify a given function or procedure to be executed by a computer using a shorter sequence of instructions. Thus, applications program entry time is reduced. For these reasons, programmers generally prefer to use the high level forms of programming instructions which represent commonly used sequences of lower level, less concentrated, instructions.

From an execution perspective, it is desirable to provide a form of computer programming instruction that is as close as possible to the form immediately used by the computer hardware to actually perform the sequence of instructions provided by the program. The lowest form of computer programming instruction is a set of boolean values grouped in sets of predetermined length in accord with the specific hardware configuration and operating system executing the applications programs. The closer the form of the computer programming instructions are to this form for use in the computer, the faster the computer runs the program since less conversion is necessary in order to obtain the machine readable form of an instruction. Furthermore, the complexity of the instruction interpreter system that executes the sequence of instructions generally decreases as the encoded computer programming instructions are broken down into lower forms. Lower level encoded computer programming instructions are also desirable in certain debugging situations because the lower form also provides detailed control information not otherwise available from the high level form of encoding.

From the foregoing description, each of the various levels of encoding computer programming instructions provides unique advantages not possessed by the others. Therefore it is advantageous for programmers to generate application programs in the form of high level languages and to then convert the high level description of the applications programs into a lower form for faster execution of the applications programs on specified computer hardware and for enhanced debugging procedures. For this reason, compilers have been formulated for converting high level encoded programming instructions to lower level instructions. Each of the previously listed high level programming languages is associated with a compiler or interpreter which converts the high level programming instructions into a lower form for execution on a computer.

Reverse compilers, programs which convert lower level computer programming instructions to a higher level, have also been formulated to a limited extent. These reverse compilers possess the ability to convert a recognized pattern of lower level computer programming instructions into a higher form. However, many reverse compilers produce a higher level form that is not identical to the higher level form that initially generated the lower level form.

Prior art encoding schemes have been formulated for converting ASCII coded BASIC instructions into machine code which in turn is converted upon request back to ASCII code. This coding scheme merely changes the representation of the instruction and does not parse or change the structure or format of any of the information into a more efficient form for execution. This prior art scheme presents merely a translator and not a compiler scheme which stores relational information in addition to the actual translated ASCII text.

Compilers are known that compile ASN.1 abstract syntaxes into an intermediate form such as parse tables. The parse table is the data structure in which a parse tree is stored. The parse table is then run directly under the control of run time library routines. Another known compiler converts ASN.1 abstract syntaxes into C data structures and also generates C programming language code to encode and decode the C data structures from and to ASN.1 basic encoding rules (BER) values. However, these prior ASN.1 compilers do not convert the high level form into a suitable intermediate form for deriving the original high level text form from the intermediate form.

In known prior art syntaxes, the compiling of sequences of instructions requires the maintenance of at least two copies of the program sequence -- one copy for each level of the program -- since it is generally not possible, with few exceptions, to restore the original form from the compiled form. The inability to convert the lower, machine executable, form into the original higher level is a consequence of the absence of specific structure information in the intermediate form. The prior machine executable versions lack information defining the relations of the elements of the intermediate form representation to one another.

Prior art systems have not provided a means for converting high level form abstract type definitions, and more particularly, ASN.1 specified abstract type definitions, into an intermediate form for use in conjunction with an interpreter such that the intermediate form may be reverse compiled into the original, high level, form from the intermediate form.

It is desirable when using ASN.1 encoded abstract type definitions to be capable of directly displaying values associated with a given named object using an interpretive tool such as the Digital Equipment Corporation distributed naming service Browser (DECdns Browser) utility provided by the Digital Equipment Corporation and known to those skilled in the art. It is also desirable to be able to directly display and modify values associated with a given object without re-compiling the corresponding abstract type definition. Furthermore, it is desirable to be capable of reverse compiling abstract type definitions in order to recreate the higher form abstract type definitions from intermediate level encoded abstract type definitions.

DE-3518139-A describes a text compiler which provides conversion from BASIC to ASCII coding and vice versa.

IEEE Transactions on Software Engineering 16, No. 10; G W Neufeld *et al:* "The Design and Implementation of an ASN. 1-C Compiler" describes a system for automatically translating input ASN. 1 modules into C and generating BER encoders and decoders for protocol defined data types.

### SUMMARY OF THE INVENTION

The present invention provides a method for converting abstract syntax from a high level to an intermediate level suitable for use in an interpretive manner. The high level form provides the time-saving programming advantages of normal high level programming languages. The high level abstract type definitions are not suitable for running on hardware in an interpretive manner; however, the intermediate form provides a form of encoding an abstract type definition specified in ASN.1 text which is used in an interpretive manner by well known ASN.1 interpreters.

An "object" is anything which is identifiable and which is of interest to hold information in the directory database. A "class" of objects is a set of objects which share a common characteristic.

An "attribute" is information of a particular type concerning an object and appearing in an entry describing that object. The "attribute type" is the component of an attribute which indicates the class of information given by that attribute. An "attribute value" is a particular instance of the class of information indicated by an attribute type. An "attribute syntax" in the context of the compiler of the present invention is a set of definitions that describe for each attribute, the underlying ASN.1 datatype.

The apparatus described herein relates to a modification to an existing ASN.1 compiler which enables a user to display and/or alter abstract type definitions. A user of an application program embodying the present invention may enter these modifications to the abstract type definitions contained in an application program while the application program is operating in an interpretive mode.

The apparatus and the method described herein are suitable for utilization with a directory of objects in order to provide a special feature called a "soft-schema". Soft schema allows abstract type definitions to be represented in a format suitable for execution in a computer operating in an interpretive mode and in a manner such that the abstract type definitions need not be re-compiled or relinked when a programmer either changes an existing abstract type definition or adds a new abstract type definition to the system. This advantage of the present invention, in contrast to compiled forms which require recompiling and relinking of the application whenever the abstract type definition for new attributes is specified or the abstract type definition for previously existing attributes for objects is modified, provides substantial time savings to programmers when debugging and altering existing attributes for objects. It may not always be feasible to re-compile and relink the application, for instance if the application is already deployed at a customer site. Therefore, soft-schema provides substantial benefits to a user of the afore-described network directory.

The invention in its broad form resides in method and an apparatus according to claims 1 and 3. According to one aspect, the invention provides means for converting an Abstract Syntax Notation One (ASN.1) definition from an intermediate level encoded form to a high level text form ASN.1 definition comprising:
memory means for receiving and storing said intermediate level encoded form ASN.1 definition;
reverse compiler means for converting said intermediate level encoded ASN.1 definition into said high level text form ASN.1 definition; and
bus means for coupling said memory means and said reverse compiler means.

The particular programming language utilized in the present invention is known in the computer programming art as Abstract syntax Notation One (ASN.1). ASN. 1 is used as a formal tool to define abstract data types. ASN.1 differs from well known programming languages such as C and PASCAL in the fact that it is used only to define abstract type definitions, it includes only a vocabulary large enough to define types and values.

A transfer syntax provides a set of rules for encoding values of the types contained in an abstract type each abstract type definition specified in the ASN.1 language. One such transfer syntax is the well known Basic Encoding Rules (BER) transfer syntax.

As described herein functions are provided to the user of the intermediate form which are not available through the high level form . In addition to he added execution performance benefits, the present intermediate form provides a more efficient way, through the use of the DECdns Browser, the X.500 browser utility and other similar utilities, for the user to display and modify pertinent abstract type definition information.

The DECdns product is a directory service containing information about objects in a computing system. The "DECdns Browser" is a display tool used in conjunction with the DECdns directory to enable a user to examine the directory database.

The DEC X.500 product is a directory service implemented in accord with the X.500, or International Organization for Standardization (ISO 9594), international standard. The "x.500 directory" is a repository of information about objects in a computing system. This repository of information is contained in the Directory Information Base (DIB). Each object in the Directory has a set of attributes associated with it. These attributes describe the properties of the object. Each attribute value conforms to a specified attribute syntax. The DEC X.500 browser is a display tool that interactively examines the directory entries in the Directory Information Tree (DIT).

The programmer can convert the program back to the higher level when a programmer wants to view the abstract type definition. Since the high level form is generally the most familiar to the programmer, it is appropriate for the abstract type definition to be represented in that form to the programmer. Since a reverse compiler in the present invention possesses the capability of generating the original high level form from the intermediate form, only a single copy of the current encoded instructions need exist at any point in time. This leads to substantial savings of storage space. Furthermore, consistency problems between multiple copies of the program represented in various level forms are avoided.

In both the DEC distributed naming service (DECdns) and DEC's implementation of the X.500 Directory Service, the compiler converts high level form abstract type definitions defined in the ASN.1 data type specification language into the intermediate form. In the DEC version of the X.500 Directory Service, the intermediate form is stored in the X.500 directory schema. In DECdns, the intermediate form is stored in the DECdns database itself. Since the high level form can be restored from the intermediate form, the high level version of an ASN.1 encoded abstract type definition need not be saved after the intermediate form is produced. The intermediate form provides enhanced performance of the DEC X.500 directory update services through faster verification that attribute values are accurately and completely assigned (well-formed) and conform to the abstract type definition specified for them. In addition, new abstract type definitions can be added to the X.500 schema or the DECdns directory and used in their respective browser utilities. In the case of the X.500 schema, the attribute syntax is enforced without having to re-compile/relink the whole X.500 or DECdns application and the Browser.

As previously mentioned, the particular interpreters contemplated for use in the present invention are the DEC distributed naming Service (DECdns) Browser, which is a well known utility provided by Digital Equipment Corporation for searching a hierarchical name space of objects and displays the names and attributes for those objects, and DEC's implementation of the X.500 Browser which is also well known in the art and is used to search for objects in a X.500 directory and display the names and attributes of objects. The interpretive function provided by each of these utilities is the application of structure and format information to a non-typed byte string in order to convert the non-typed byte string into a set of typed fields. This in turn enables the user of the DNS and X.500 utilities to display attribute values efficiently and in a user friendly fashion. In addition, the present invention is used to perform X.500 directory update services faster through efficient enforcement of the abstract type definitions specified for the attributes.

### DESCRIPTION OF THE DRAWINGS

A more detailed understanding of the invention may be had from the following description of a preferred exemplary embodiment, to be understood in conjunction with the accompanying drawing wherein:
FIG. 1 is a diagrammatic representation of a computing system for compiling and storing;
FIG. 2 is a flow diagram for the operation of a compiler for converting high level ASN.1 abstract type definitions into intermediate form;
FIG. 3 is an illustrative example of the type, length, and value (TLV) format of ASN.1 BER values used to represent the abstract type definitions in the intermediate form;
FIG. 4 is a diagrammatic representation of the parse tree for an exemplary ASN.1 type definition module;
FIG. 5 is a diagrammatic representation of the parse tree for an exemplary ASN.1 value definition;
FIG. 6 is an illustrative example of an ASN.1 BER Intermediate form value for an abstract type definition;
FIG. 7 is an illustrative depiction of the program flow for converting the high level encoded abstract type definition to the intermediate form; and
FIG. 8 is a legend for converting the labels used in FIGS. 6 and 7 into the actual definitions which they represent.

### DETAILED DESCRIPTION OF THE PREFERRED EMBODIMENT

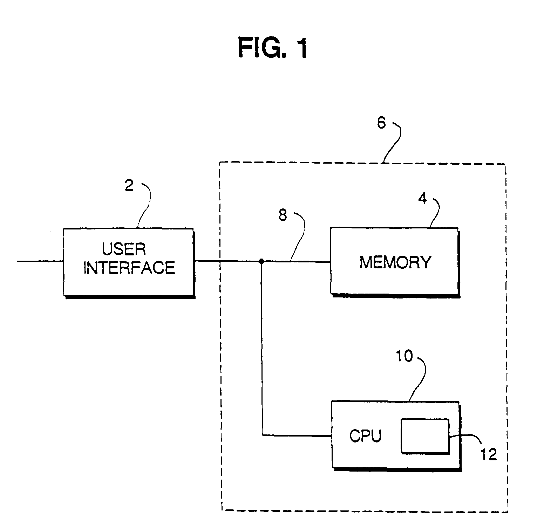

Referring first to FIG. 1, in the present preferred embodiment of the present invention, the text version of the ASN.1 definitions will be entered into the memory of any suitable computer for carrying out the compilation process, supporting the interactive user programs which use the intermediate encoded form, and performing the regeneration of the high level text form of the ASN.1 definitions from the intermediate form as would be known to those skilled in the art. Thus, the general computing facility used to describe the present invention is provided for the purpose of describing the present invention and other suitable computing systems would be known to those skilled in the art.

A system user enters the high level text ASN.1 definitions through a user interface 2 into a memory unit 4 of a computing facility 6 by means of a system bus 8. Upon reception of a proper command for invoking the compilation process hereinafter described, a central processing unit (CPU) 10 transfers the high level text form of the ASN.1 definitions on the bus 8 to a local memory 12 of the CPU 10. Thereafter, the CPU 10 executes the hereinafter described compilation routines in order to render an intermediate, BER encoded, form of the high level form ASN.1 definitions. Next the CPU 10 transfers the intermediate level ASN.1 definitions on the system bus 8 from the local memory 12 back to the memory unit 4.

A unique quality of the intermediate form, the ability to regenerate therefrom the original high level text form, provides the computing facility 6 the advantageous option to maintain only a single copy of the ASN.1 definitions at any point in time. Therefore, the CPU 10 discards the original high level text form of the ASN.1 definitions after generating the intermediate form.

The CPU 10, in conjunction with the user interface 2 and system bus 8 provides the user with several known applications for using the intermediate form of the ASN.1 definitions. These applications are described more fully hereinafter.

One choice presented to the system user is the option to regenerate the original high level form of the ASN.1 definitions from the intermediate form. Upon receipt of the proper command on the system bus 8, the CPU 10 converts the intermediate level form into the original high level text form (without the original comments) by means of a set of reverse compiling routines described hereinafter. If the user desires, the high level form of the ASN.1 definitions will be saved in the memory 4 and the intermediate level form is discarded by the computing facility 6.

### Summary of the ASN.1 Notation

Abstract Syntax Notation One (ASN.1) is a well known standard for specifying abstract type definitions which are also referred to as abstract syntaxes. This standard is utilized by programmers to define complex data types from a set of data structure primitives. ASN.1 has been formulated as an international standard by the International Organization for Standardization (ISO) and has been adopted by the International Electrotechnical Commission.

ASN.1 contains BOOLEAN, INTEGER, BITSTRING, OCTETSTRING, as well as other primitive datatypes. ASN.1 also contains constructor data types such as SEQUENCE, SET, CHOICE, SEQUENCE OF, and SET OF. The "SEQUENCE" data type corresponds to the PASCAL "record". A SEQUENCE contains a predetermined set of fields. Using a SEQUENCE, the programmer may build a new type from an arbitrary series of other types. SEQUENCE OF is another type similar to SEQUENCE; however, SEQUENCE OF is an arbitrary ordered length series of zero or more values each of the same type. The "CHOICE" structure provides a choice of values from a list of specified types listed in the definition. A "SET" type is similar to a SEQUENCE; however, the SET structure allows the fields to appear in any order. SET OF is similar to SEQUENCE OF; however, the SET OF structure allows values to appear in any order. Finally, the NULL type is the ASN.1 type representing an empty value, that is nothing. Each of these prefixed types have predefined tags set forth in the accepted industry standard. When an ASN.1 user defines a new type derived from one of the predefined types, the new type has the same tag as the predefined type. Alternatively, the user may assign a new tag to the derived type.

The ASN.1 standard also defines Basic Encoding Rules (BER). The ASN.1 standard (ISO 8824) provides a notation for specifying abstract types and values. BER provides a set of rules for encoding the types and values specified in ASN.1.

### Description of the Intermediate Form

The abstract syntax definitions for the intermediate form set forth in Table A below provide the framework for the preferred embodiment of the present invention. The ASN.1 definitions in Table A are derived from the productions used in the ISO standard set forth in Table B below which is reproduced from Annex F of the ISO International Standard (ISO 8824, 1987). These syntax definitions are described in the form of ASN.1 notation and describe the abstract type of the intermediate form.

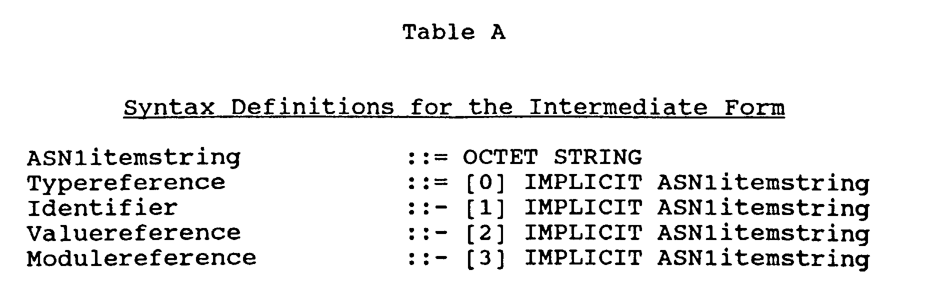

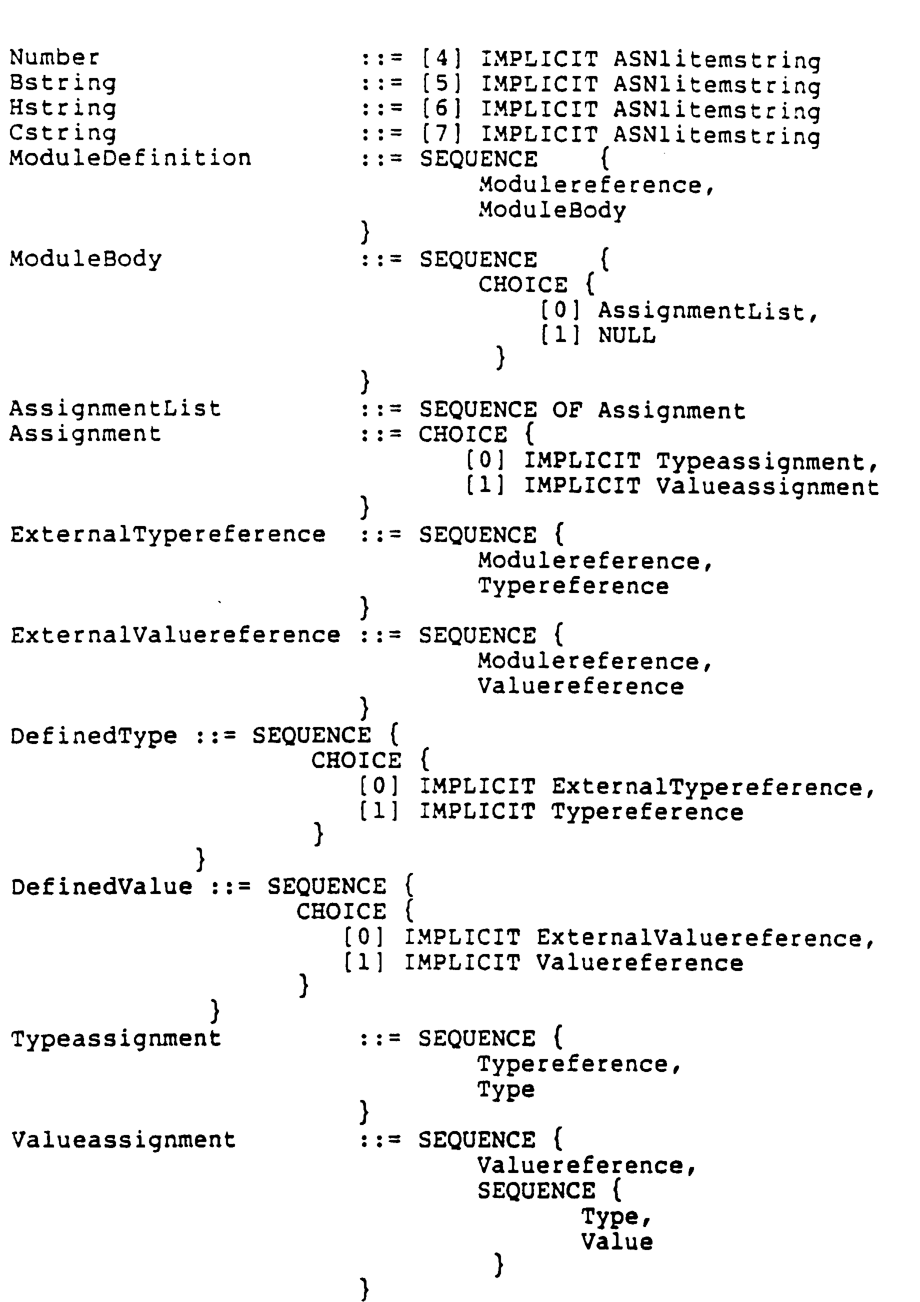

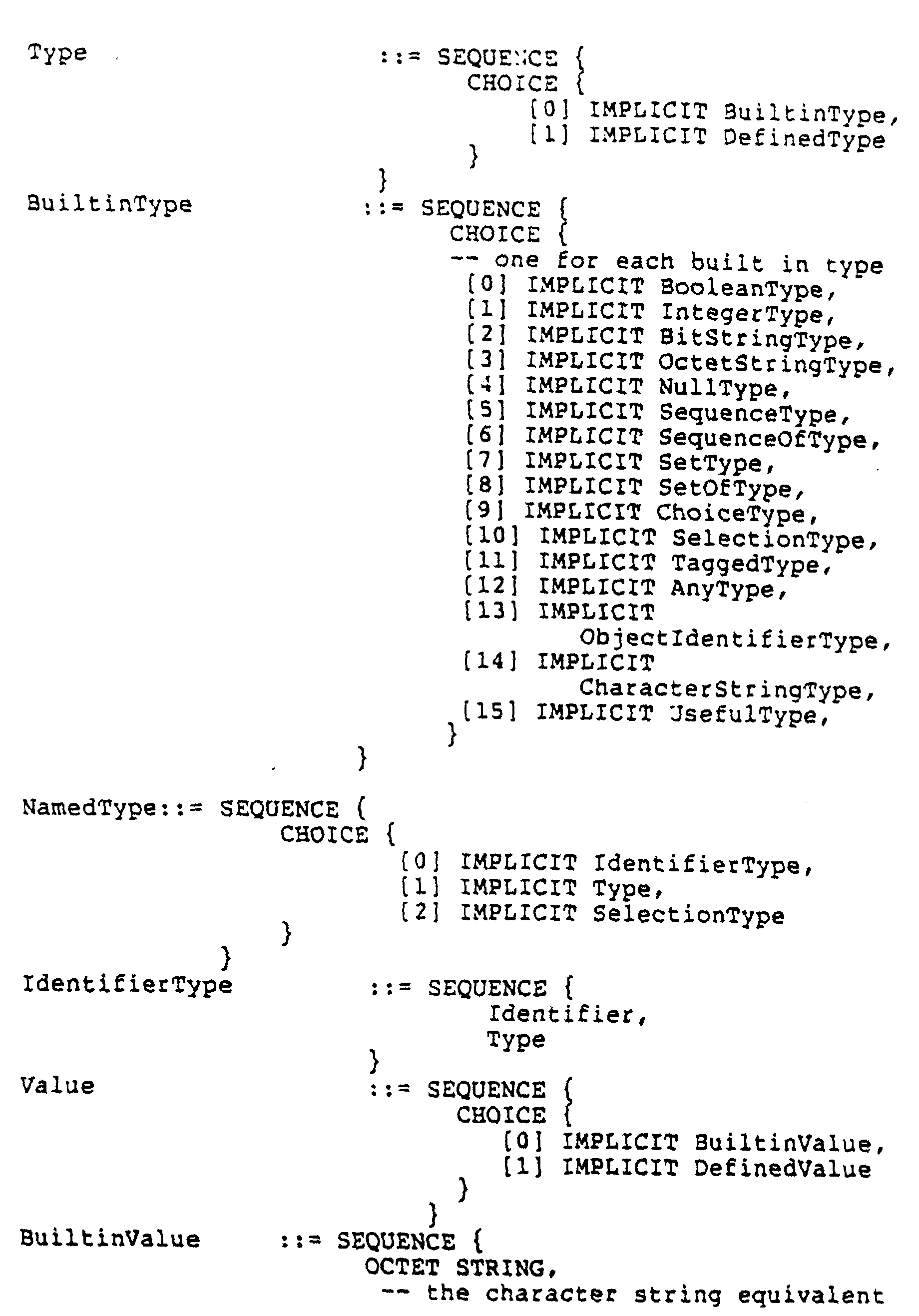

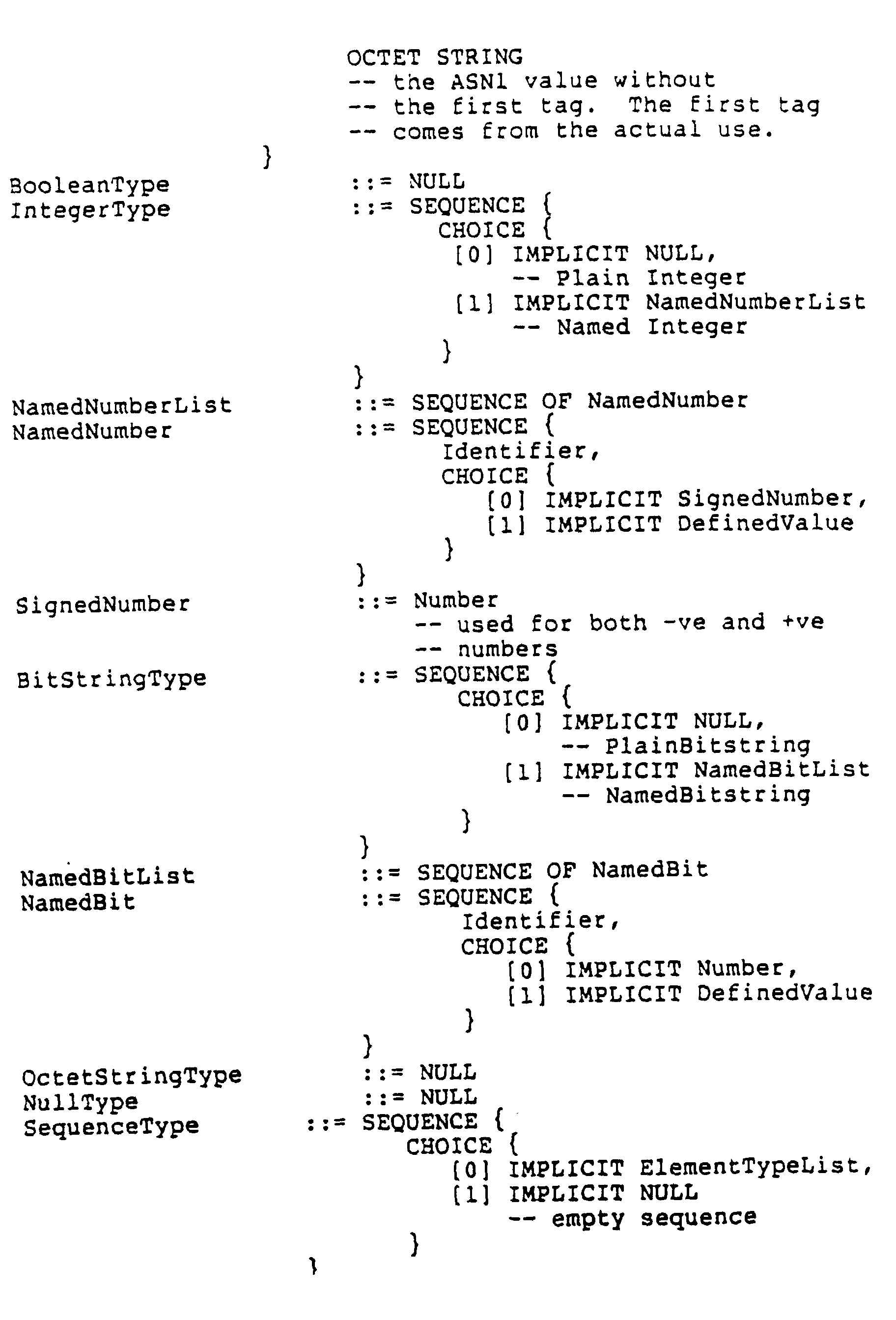

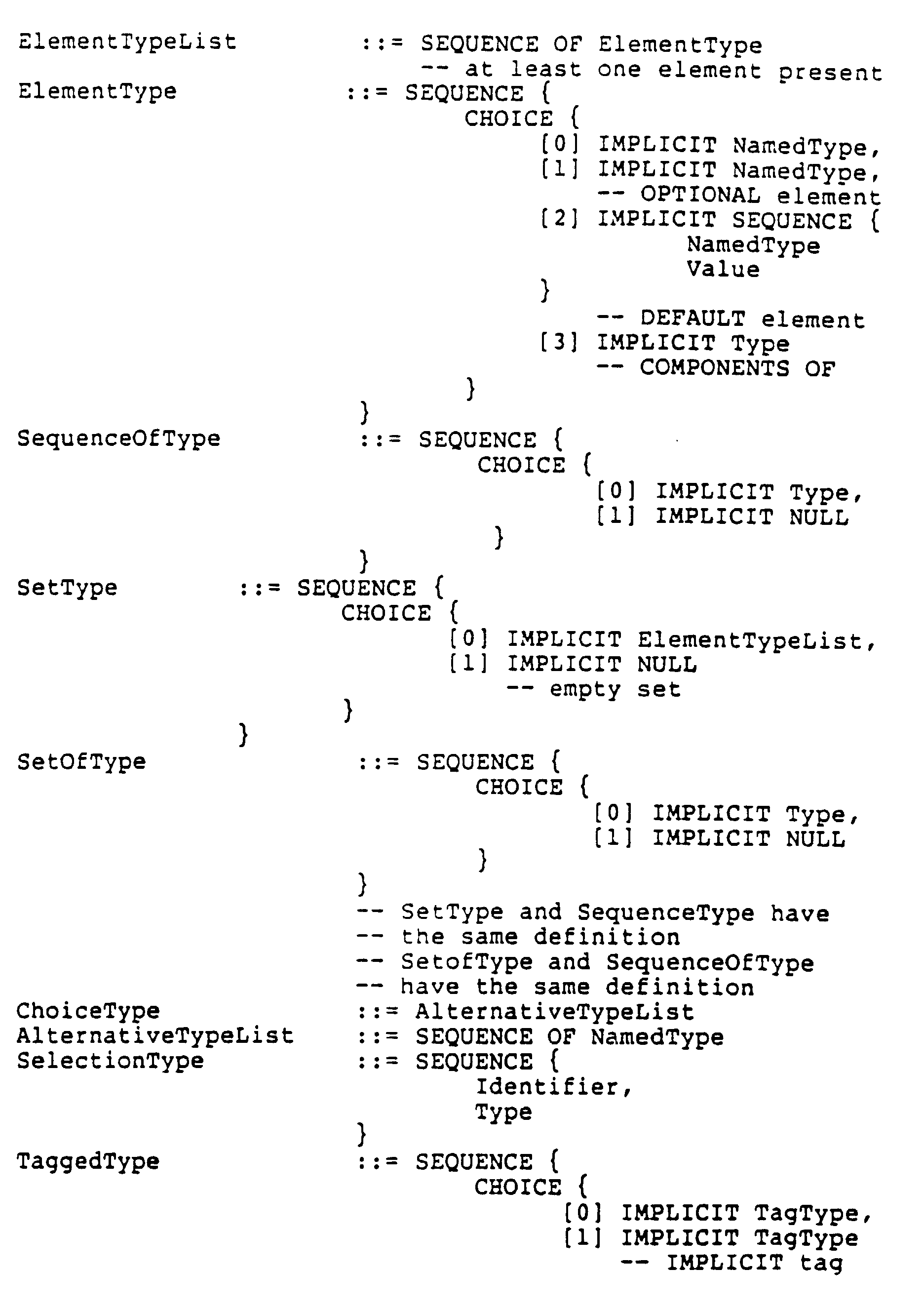

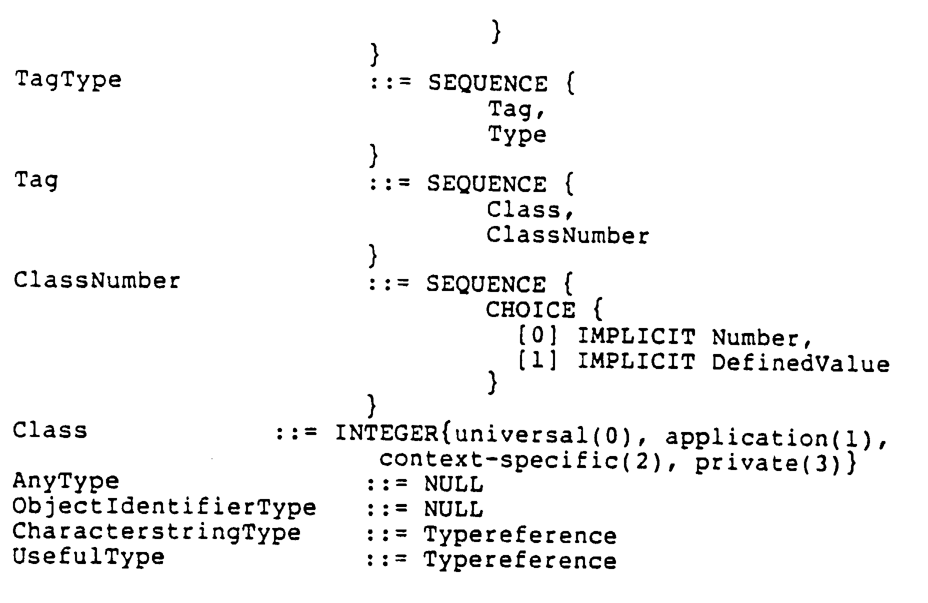

**Table B**

| Summary of the ASN.1 notation | | |
|---|---|---|
| The following items are defined in clause 8 of the ISO 8824 Standard (1987): | | |
| typereference | ( | ANY |
| identifier | ) | EXTERNAL |
| valureference | [ | OBJECT |
| modulereference | ] | IDENTIFIER |
| comment | - | OPTIONAL |
| empty | BOOLEAN | DEFAULT |
| number | INTEGER | COMPONENTS |
| bstring | BIT | UNIVERSAL |
| hstring | STRING | APPLICATION |
| cstring | OCTET | PRIVATE |
| "::=" | NULL | TRUE |
| { | SEQUENCE | FALSE |
| } | OF | BEGIN |
| < | SET | END |
| ' | IMPLICIT | DEFINITIONS |
| . | CHOICE | |

The following productions are used in this International Standard, with the above items as terminal symbols:

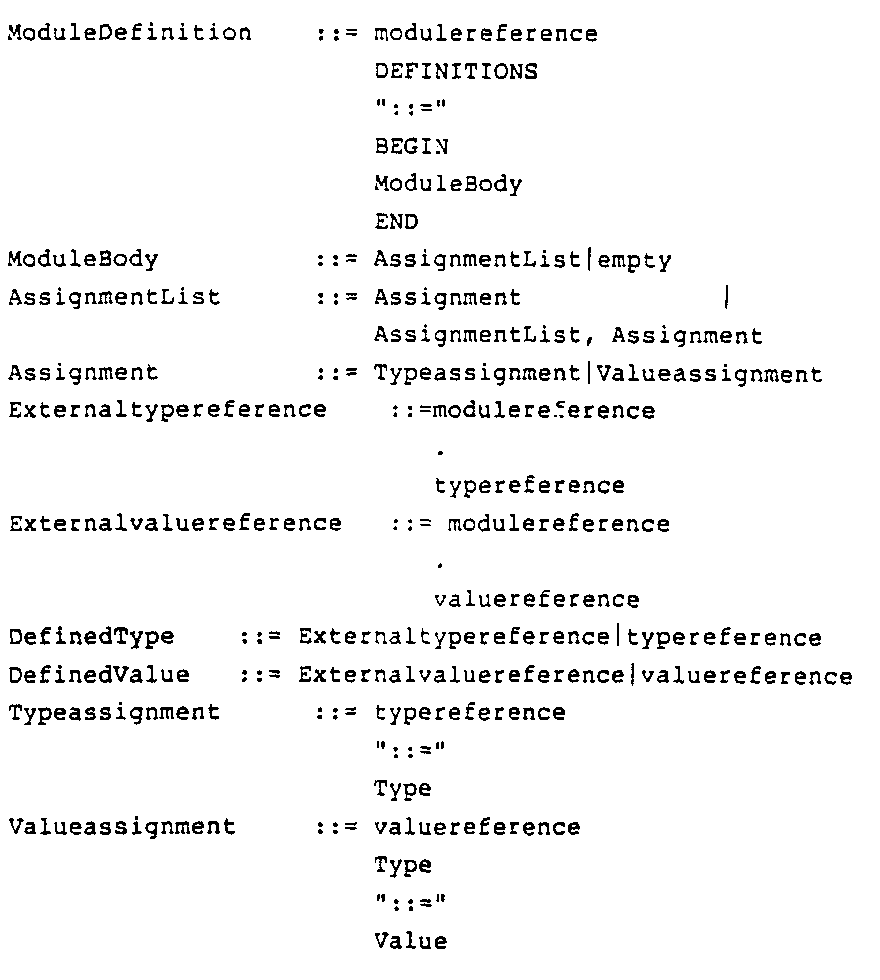

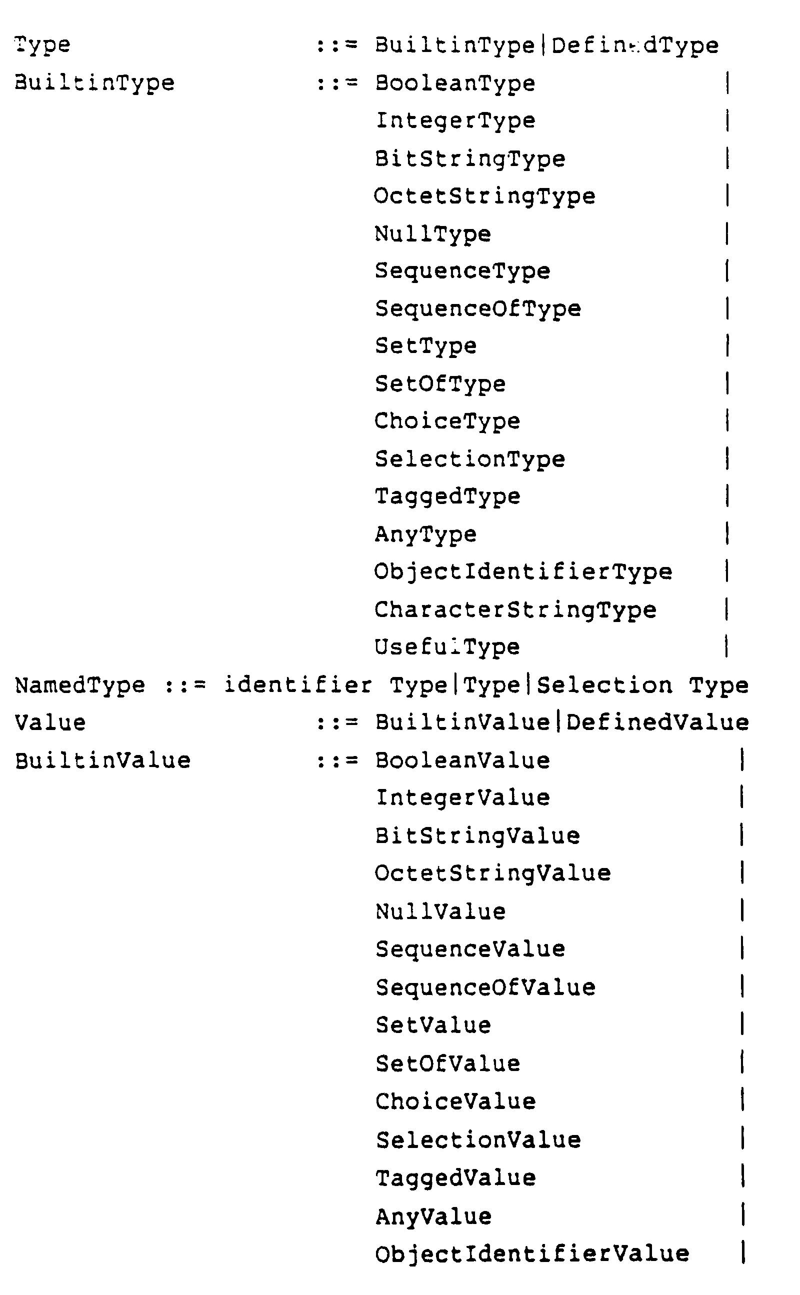

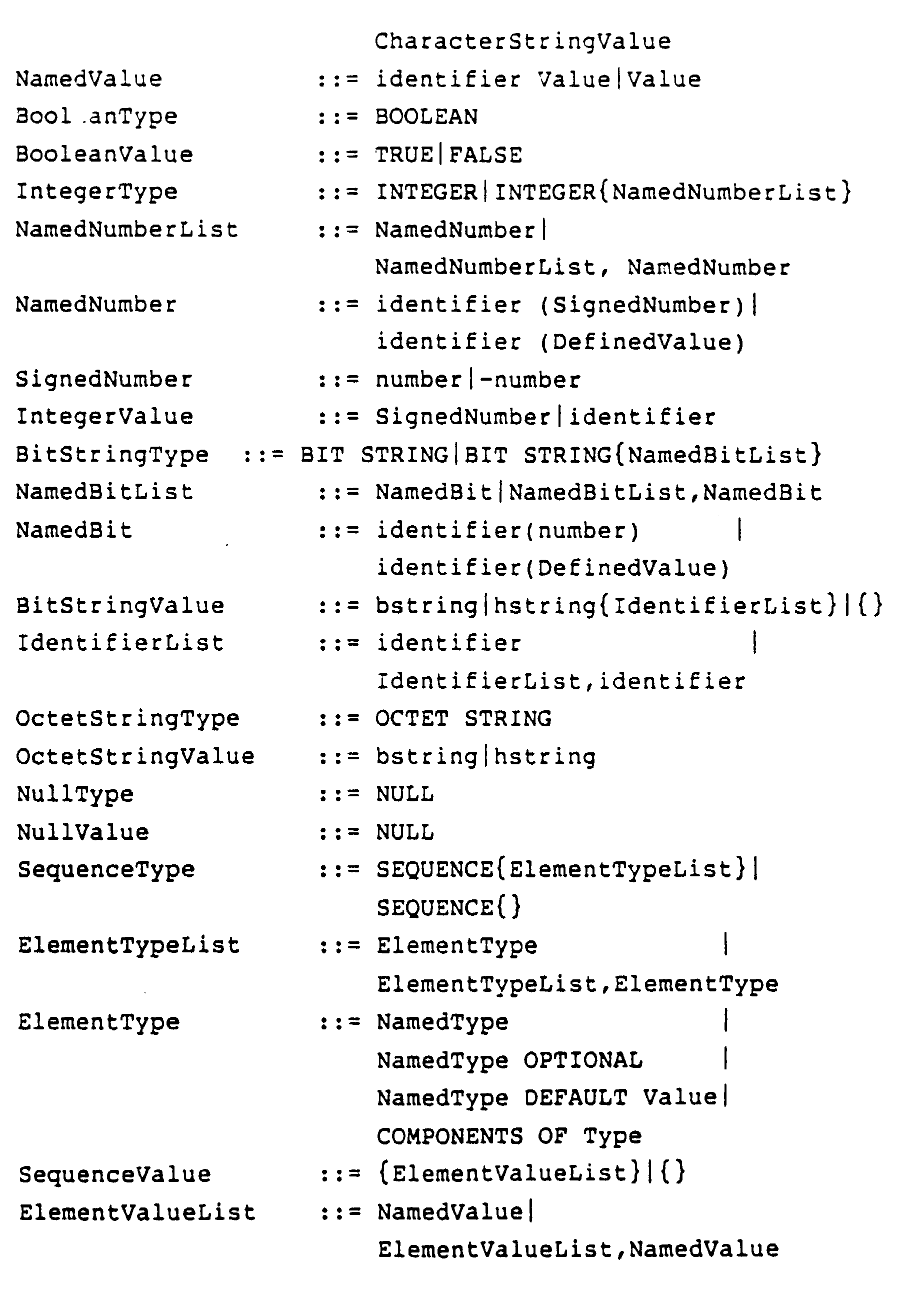

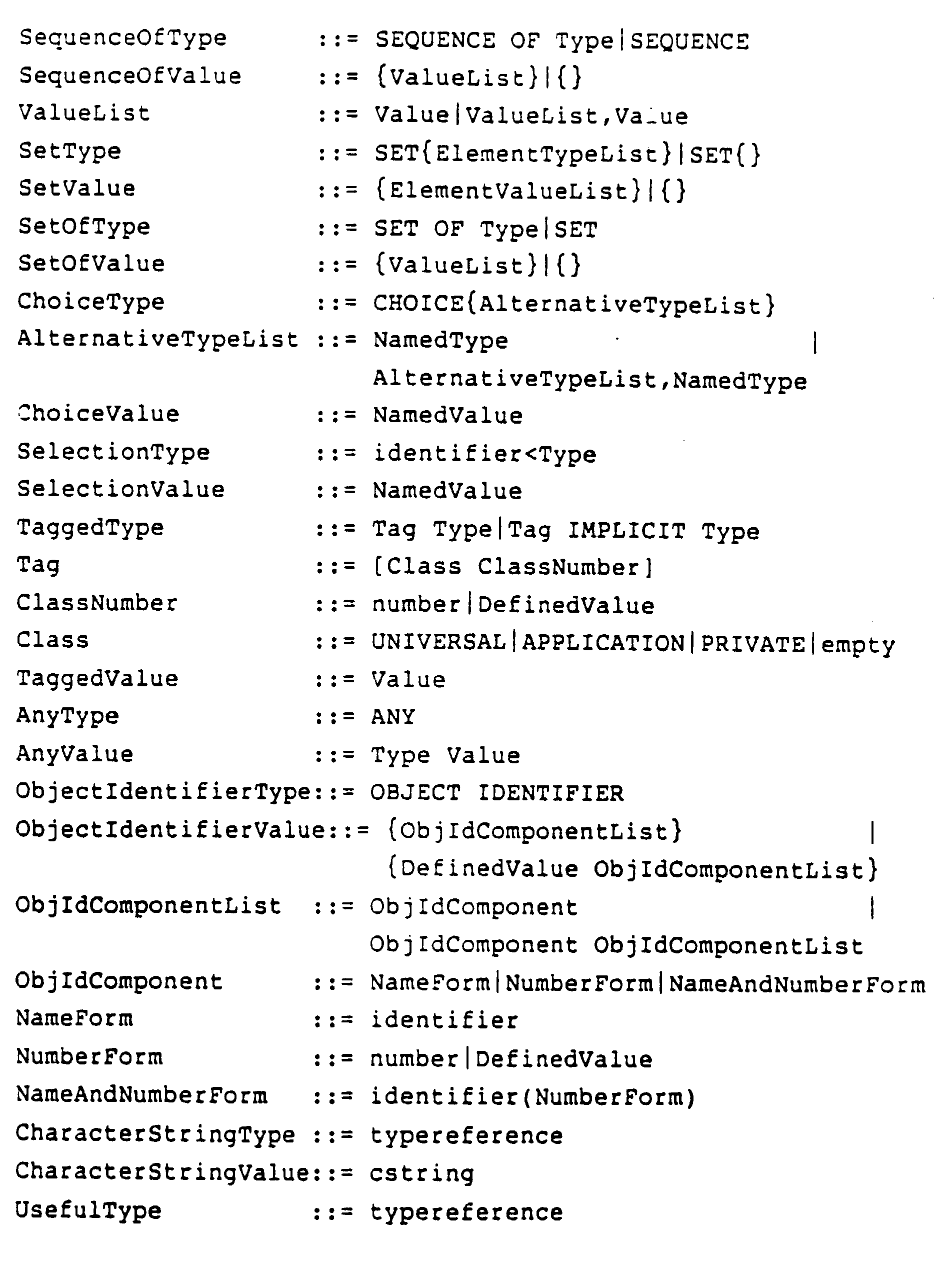

It should be noted however that one of ordinary skill in the art would readily appreciate that this list of definitions could be expanded, contracted or modified to be represented in another form without exceeding the scope of the present invention. Furthermore, it is contemplated that the ASN.1 standard may be modified in the future and that any changes made to the intermediate form compiler to incorporate these changes would be known to one skilled in the art.

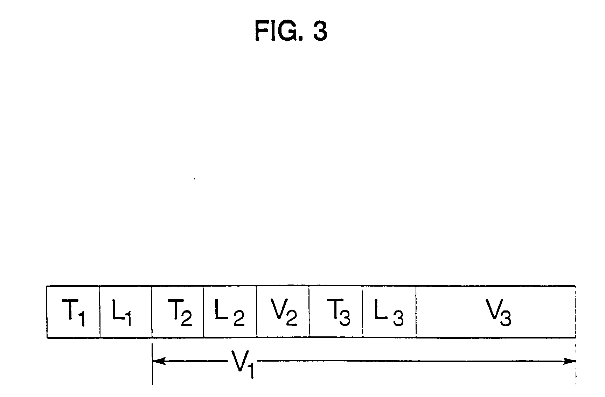

The intermediate form for the definitions are represented in accord with the ASN.1 BER standard Type (also referred to as tag), Length, Value (TLV) format shown in FIG. 3. The type field, or tag, designates the encoded data type contained in the value field. The contents of the type field also indicate the choice of a list of possible choices in the definitions listed in Table A. The length field indicates the number of bytes which remain before encountering the end of the particular value field. Finally, the value field contains the value associated with a particular tag. As one should readily perceive from FIG. 3, the BER values may be nested. Thus, the recursive structure of the parse tree for a given abstract type definition is maintained. The tag, length and value fields will be further described hereinafter in conjunction with an illustrative example of the intermediate form of ASN.1 abstract type definitions.

In the preferred embodiment of the present invention, the intermediate form is encoded according to the Basic Encoding Rules (BER). It is contemplated that one of ordinary skill in the art may produce within the scope of the present invention an intermediate form using a different set of encoding rules (i.e. transfer syntax).

One exception to the parallel relation between the ASN.1 definitions in Table A and the production rules specified in Table B exists with respect to the BuiltinValue type. From the production rules, one would expect the ASN.1 definition for BuiltinValue to contain a CHOICE structure. However, the complete parse tree is not necessary for regenerating the high level form from the intermediate form for a value definition specified as a BuiltinValue.

Two general uses are made of the intermediate form. First, one may regenerate the high level form from the intermediate form. Second, one may use the intermediate form to perform various tasks. The parse tree for BuiltinType is captured because this is necessary to fulfill the second purpose. For BuiltinValue, however, only the BER value specified by the definition is needed for fulfilling the second purpose. In addition, the corresponding text that specifies the value must be captured in order to facilitate reproduction of the original text from the intermediate form. Therefore, in the preferred embodiment of the present invention, only those two pieces of information are represented in the intermediate form for a BuiltinValue.

In the ASN.1 syntax definitions listed in Table A, BuiltinValue contains a SEQUENCE consisting of two fields. Each field in the ASN.1 definition for BuiltinValue is an OCTET STRING. The first field contains the character string equivalent of the specified value. The second field contains the BER value for the specified BuiltinValue without the first, top level, tag. Thus, for a BOOLEAN value of TRUE the two fields of the BuiltinValue are the character string representing "TRUE" and the BER value corresponding to TRUE.

The remaining syntax definitions listed in Table A parallel the parse tree structure for the ASN.1 module. It is therefore easy to regenerate the high level form from the BER value for the definition by analyzing the BER value in the same manner one would trace the parse tree representation of an ASN.1 module. The regeneration of the high level text form from the intermediate level is described hereinafter.

The intermediate form for an ASN.1 module is of the type ModuleDefinition defined in Table A. ModuleDefinition is a SEQUENCE containing two fields. The first field, "Modulereference," contains the name of the module. The second field is of type ModuleBody and is a SEQUENCE of one field containing the actual contents of the named module. The contents are either a list of assignments in the form of the afore-described AssignmentList ASN.1 structure or NULL (if there are no type or value assignments in the module), and the contents are tagged with either [CONT 0] or [CONT 1] respectively. "CONT" indicates a context specific tag.

The intermediate form for a list of assignments is a SEQUENCE OF type "Assignment". This type structure is specified by the AssignmentList type. The list of assignments included within the BER value of type AssignmentList are constructed individually by the compiler in the form of the type "Assignment". These individual assignments are then aggregated in the form of the "SEQUENCE OF" ASN.1 structure.

Turning to the definition of "Assignment" in Table A, this ASN.1 definition consists of a CHOICE type of either TypeAssignment or ValueAssignment and represents the assignment of a definition for a type or for a value.

If TypeAssignment is designated for a particular ASN.1 abstract type definition, then the intermediate form for the definition comprises a SEQUENCE containing two fields. The first field is of type "Typereference" and holds the name of the type definition placed at the left side of the high level representation of a particular ASN.1 type definition. The second field is of type "Type" and this field contains the actual definition on the right side of the definition corresponding to the named abstract definition at the left side of the type assignment. The further decomposition of the "Type" field in the definition would be accomplished by a nested specification of additional BER values in accord with the ASN.1 definitions set forth in Table A in a manner known to those of ordinary skill in the art.

If, alternatively, ValueAssignment is designated for a particular abstract type definition, then the intermediate form for the definition comprises a SEQUENCE containing two fields. The first field is of type "Valuereference" and holds the name of the value positioned on the left side of the high level representation of a particular ASN.1 value definition. The second field contains another SEQUENCE. This SEQUENCE contains an additional two fields. The first field is of type "Type" which contains the actual type definition on the right side of the definition corresponding to the named abstract definition at the left side of the value assignment. The second field is of type "Value" which contains the actual value specified on the right hand side of the "::=" symbol in the high level text form of the definition. It is a SEQUENCE containing one field which is either of type DefinedValue or BuiltinValue. Both the first and second sub-fields of the second field of ValueAssignment are filled with an appropriate BER value in accord with the ASN.1 syntax definition specified in Table A in a manner as would be known to one of ordinary skill in the art in view of the teachings of the definitions specified in the Table A.

Consider the following illustrative input module:

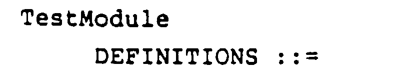

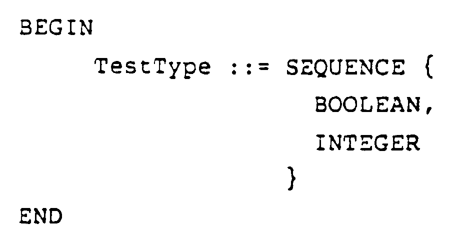

### Description of the Compilation Process

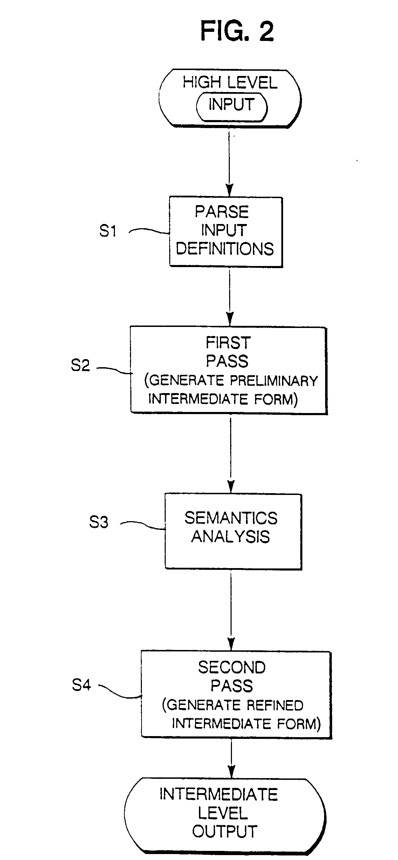

Consider the input to be an ASN.1 module which is a list of ASN.1 assignments (type or value), and we are trying to generate the intermediate form for the module. In general, the compilation process follows known prior compiler forms as described in chapter 1 of Compilers: Principles, Techniques, and Tools, by A. Aho, R. Sethi and Jeffrey D. Ullman and published by Addison-Wesley Pub. Co. (1986). Turning now to FIG. 2, the steps for converting the high level ASN.1 abstract type definitions into the intermediate form are illustrated. The first step S1 in converting the high level representation of the abstract type definitions into the intermediate form is to parse the ASN.1 text. The parser receives the input text for the abstract syntax and creates a parse tree representation of the input text by creating a node for each type encountered and branching when necessary to reflect nesting of ASN.1 primitive types. The form of the parse tree conforms to the grammar specified in Table B.

The compiler subsequently modifies the parse tree when it is performing the type resolution and semantic check during the semantic analysis step S3 wherein the compiler determines the types of data associated with the abstract syntax and instances of particular information. Errors that could occur during the parser stage are those that arise when the input received by the parser does not obey or conform to the ASN.1 vocabulary or grammar or syntax. An example of an error which would be flagged by the parser would be misspelling the word "SEQUENCE", or a missing "{" in an ASN.1 statement such as "A ::= SEQUENCE BOOLEAN}". Errors that could occur during the type resolution and semantic analysis are those that arise when the input does not conform to the semantics defined in the ASN.1 standards. Both the syntax and semantic errors would be known to one skilled in the art.

It should be noted that if there is an error during execution of the compiler routine then the intermediate form will not be generated in its final form. The intermediate form is the transformed equivalent of the input in the sense that it is possible to reproduce the input text from the intermediate form. The parse tree generated by the parser is faithful to the high level input form upon completion of the Parsing stage. After that, the parse tree is manipulated and modified by the performance of type resolution and semantic analysis and to instantiate the values defined in value definitions or default values in SETs and SEQUENCEs. The parse tree essentially represents the syntax of the input after completion of the Parsing stage, but the instantiation of the values defined in value definitions and default values in SETs and SEQUENCEs is complete only after the Semantic Analysis stage. These values shall be referred to hereinafter as BuiltinValues and correspond to the data type BuiltinValue described in Table A. Both pieces of information (syntax tree and instantiation) are required in order to construct the intermediate form. Therefore the compiler constructs the intermediate form in two stages.

If the compiler does not detect any errors during the Parsing stage, then control passes to the stage of the compilation process referred to herein as the "First Pass" intermediate form generation wherein the "Preliminary Intermediate Form" of the abstract type definitions is constructed. This stage is indicated by step S2 in FIG. 2.

### Intermediate Form - Pass 1

In the First Pass step S2, the Preliminary Intermediate Form is constructed by walking the parse tree and creating an ASN.1 BER value of type ModuleDefinition. As the compiler traverses the parse tree, the parse structure of the input ASN.1 abstract type definition is faithfully reflected in the parse tree. As a consequence it is easy to construct the ASN.1 BER value of type ModuleDefinition. There are a set of routines, one for each definition in Table A. Each routine constructs the Preliminary Intermediate Form for a particular definition and returns the Preliminary Intermediate Form back to the caller. These routines shall be referred to hereinafter as "Generator" routines. Thus, the Generator routine corresponding to the type "ModuleDefinition" constructs the Preliminary Intermediate Form for ModuleDefinition, the Generator routine for the type "Type" generates the Preliminary Intermediate Form for Type, and so on.

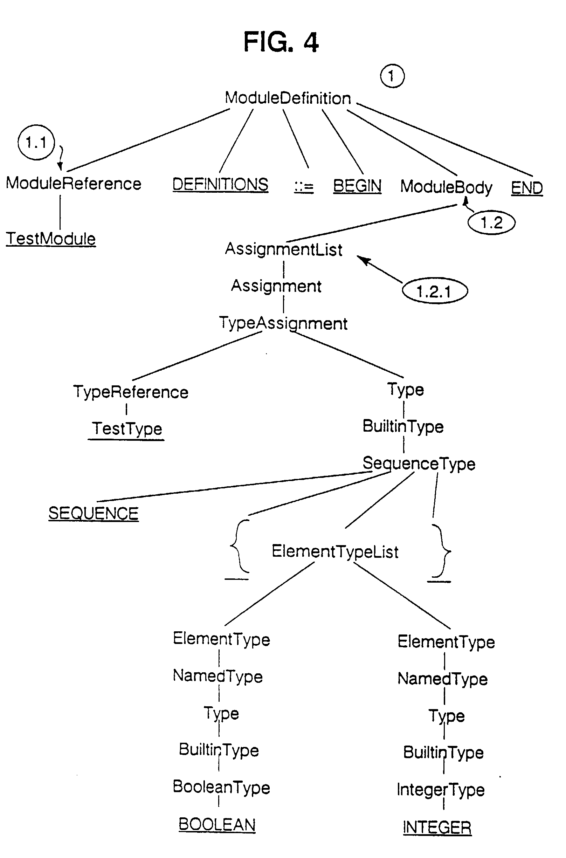

Each of these Generator routines receives a pointer into the aforementioned parse tree. The routine called by a particular routine depends on the symbol it encounters at the pointer. The Generator routine analyzes the pointer referencing a location in the parse tree and recursively calls other routines in the set of Generator routines. The pointer is updated during each recursive call as additional nodes are added to the definition. These Generator routines, in turn, generate their expected portion of the Preliminary Intermediate Form. The called routine, upon completion, returns the required Preliminary Intermediate Form to the caller. The caller uses the returned intermediate form to complete the generation of the Preliminary Intermediate Form that it was designed to produce. This process is further explained by example hereinafter in connection with the description of the first pass compilation of the parse tree illustrated in FIG. 4.

The Generator routines exhibit the same calling structure as indicated in the parse tree. The branches of the tree are traced and no branch is exited until all sub-branches and leaves have been visited. This is expected since the parse tree structure is intentionally incorporated in the intermediate form.

The above description applies to all the generator routines, except one, namely that corresponding to the type "Value". The behavior of the Generator routine for Value does not follow the parse tree structure. The node corresponding to Value in the parse tree is analyzed by the "Value" Generator routine to determine whether it expands to BuiltinValue or to DefinedValue. If it expands to DefinedValue, the recursive calling and building of the intermediate form continues as described above. If it expands to BuiltinValue, the Generator routine returns a SEQUENCE containing one element, namely [CONT 30] NULL, as its intermediate form. [CONT 30] NULL serves as a place holder. The placeholder is replaced during the Second Pass (described hereinafter) with the actual value whose tag is [CONT 0] and whose type is BuiltinValue. At the same time, the pointer to the parse tree node corresponding to the BuiltinValue is added to a queue of pointers (referred to as the BuiltinValuePointer queue). This queue is used to replace the place holder "[CONT 30] NULL" with the correct data during the Second Pass. If the BuiltinValuePointer queue is empty at the end of the First Pass, the Second Pass need not be performed.

The compiler, however, must perform the other stages in order to ensure that the input is free of errors. Only then is the Preliminary Intermediate Form deemed correct. The compiler will not generate the intermediate form for incorrect input. Therefore, if the compiler detects errors in the Type Resolution stage or the Semantics Analysis stage, the compiler discards the intermediate form.

Consider, for illustrative purposes, the parse tree illustrated in FIG. 4. The Generator routine for ModuleDefinition is called with the pointer referencing the parse tree at node 1. The Generator routine for ModuleDefinition will create the Preliminary Intermediate Form for ModuleDefinition, which is a SEQUENCE consisting of two fields, the Preliminary Intermediate Form for the type "ModuleReference" and the Preliminary intermediate form for the type "ModuleBody". This routine will call the Generator routine for ModuleReference with a pointer to node 1.1. The Generator routine for ModuleReference returns the Preliminary Intermediate Form for ModuleReference. Next, the Generator routine for ModuleDefinition calls the Generator routine for ModuleBody, with a pointer referencing node 1.2. The Generator routine for ModuleBody returns the Preliminary Intermediate Form for ModuleBody. These two intermediate values returned by the Generator routines for ModuleReference and ModuleBody are incorporated as fields within the SEQUENCE for ModuleDefinition and are returned to the routine which called the ModuleDefinition Generator routine.

Next, consider the Generator routine for ModuleReference. This routine creates a BER value of type ModuleReference with the actual value being "TestModule". Thus, the tag is [CONT 3] or A3H (Hexadecimal), the length is 0AH, and the value is "TestModule".

Now consider the Generator routine for ModuleBody. This routine examines node 1.2 and analyzes the contents to determine whether the ModuleBody expands to an AssignmentList or to empty in the parse tree. In the illustrative example, the pointer references an AssignmentList. The ModuleBody Generator routine recursively calls the Generator routine for AssignmentList with a pointer referencing node 1.2.1. When the call to the Generator routine for AssignmentList is complete, a SEQUENCE value with one element whose tag is [CONT 0], whose length is the length of the value returned from the call to the Generator routine for AssignmentList and whose value is the value returned in the call, is constructed and returned. On the other hand, if the ModuleBody expanded to empty (as would occur when there are no definitions in the module), then a SEQUENCE value with one element, whose tag is [CONT 1], whose length is 0, and whose value does not exist would be returned.

Though only part of the first pass compilation process for a branch of the parse tree of FIG. 4 has been described, the first pass compiler while constructing the Preliminary Intermediate form, investigates in an orderly manner each node of the parse tree represented in FIG. 4 in the manner previously described by this partial description of the first pass compilation. The branches from each node are visited from left to right in the parse tree of FIG. 4. A branch is not exited until all of its sub-branches have been visited.

### Type Resolution

After the first pass stage S2 of the compiling process is complete, the type resolution stage of the compiling process is performed in the first part of the Semantic Analysis stage comprising step S3 of the compiling process in an manner as is known to those skilled in the art. During the type resolution stage, the compiler walks the parse tree created by the parser and keeps track of forward references and resolves all forward and external references. The type resolution procedures are well known to those of ordinary skill in the art. While walking down the parse tree the compiler checks each symbol against local as well as external definition tables. At the close of the type resolution stage, all symbol names should be matched to their proper value/type symbol address. If any unresolved references remain, then appropriate warnings are generated in any manner as would be known to those of ordinary skill in the art.

### Semantic Check

During the Semantic Analysis step S3, the compiler walks the parse tree generated previously by the parser and verifies that the types and values conform to the semantics defined in the ISO International Standard (ISO 8824, 1987). The semantics analyzer fills the types of value symbols. The output of this stage of the compiler process is the generation of error messages for types and values which do not conform to the rules set forth in the ISO standard (ISO 8824, 1987).

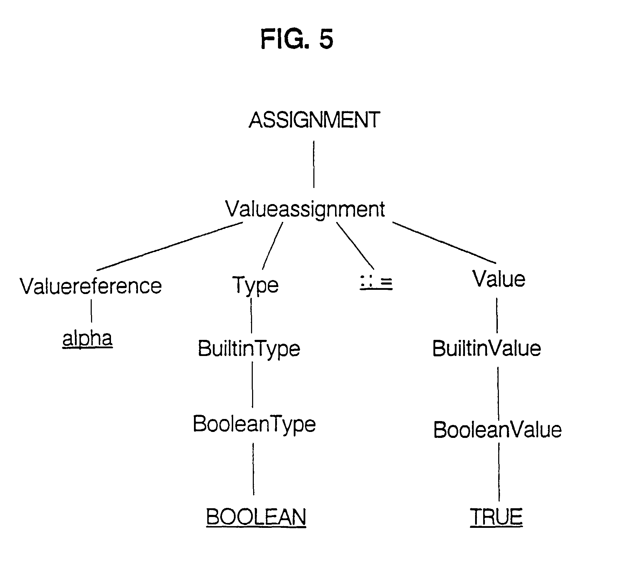

The semantics analysis is tailored to the intermediate form generation of the present invention. For nodes in the parse tree corresponding to the production rule "BuiltinValue ::= ..." in the ISO Standard (ISO 8824, 1987) such as the one in FIG. 5, two additional pieces of information are generated and attached to the parse tree. These two pieces of information equal the string equivalent of the specified value and the BER value of the specified value. Generation of these two pieces of information is straight-forward and achievable in any appropriate manner as is known to those of ordinary skill in the art.

To illustrate this representation of an ASN.1 value definition, consider the following value definition.
alpha BOOLEAN ::= TRUE
The parse tree for the above definition is illustrated in FIG. 5. The string equivalent for the specified value (that is, for the BuiltinValue node in the parse tree) is "TRUE", and the BER value, without the first tag, is two hex bytes 01H and 01H.

### Intermediate Form - Pass 2

If there are no errors detected in the previously described stages of the compiler process, then the compiler executes the Second Pass step S4. As previously stated, the construction of values of type BuiltinValue is deferred to the second stage because the necessary data is not available until after the compiler performs the Semantic Analysis stage. During the Second Pass, the compiler replaces the placeholder values "[CONT 30] NULL" with actual values. In addition, the Preliminary Intermediate Form ASN.1 BER value is traversed and the Refined Intermediate Form is simultaneously constructed. The Refined Intermediate Form is the same as the Preliminary Intermediate Form except for the substitution of actual values for placeholder values. The substitution of actual values may be accomplished in any manner as would be known to those skilled in the art.

The traversal of the Preliminary Intermediate Form is not a byte by byte traversal, but a structured traversal (ASN.1 BER values are structured values) by opening SEQUENCEs by examining the associated tags as would be known to one skilled in the art. Whenever "[CONT 30] NULL" is encountered in the Preliminary Intermediate Form, a value with tag [CONT 0], and of type BuiltinValue is placed in the Refined Intermediate Form. The necessary information for constructing the value of type BuiltinValue is referenced by the first pointer in the afore-described BuiltinValuePointer queue. The pointer indexes a node in the parse tree that corresponds to a BuiltinValue.

As a result of the semantics analysis this node references two pieces of information: the string equivalent of the BuiltinValue and the ASN.1 BER value without the "T" or tag field of the BER value. A SEQUENCE value containing these two elements is built. The compiler assigns the tag of [CONT 0] to this value and then inserts the tag in the Refined Intermediate Form in place of the placeholder [CONT 30] NULL. The pointer referencing the pointer values in the BuiltinValuePointer queue is advanced to the next pointer in the queue.

At the end of the Second Pass all the [CONT 30] NULL placeholders have been replaced by actual values in the Preliminary Intermediate Form, and all the pointers from the queue have been used, and the BuiltinValuePointer queue is empty.

### Detailed Description of the Intermediate Form for a High Level Abstract Type Definition

Consider the following example of an ASN.1 module.

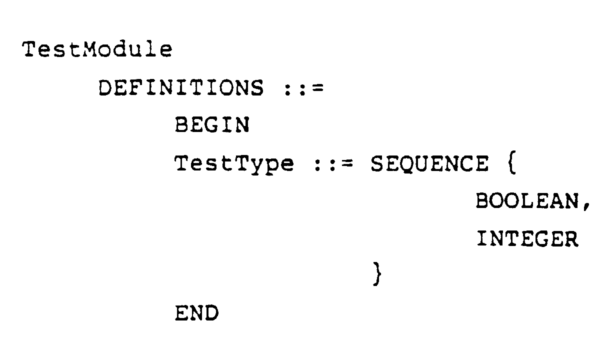

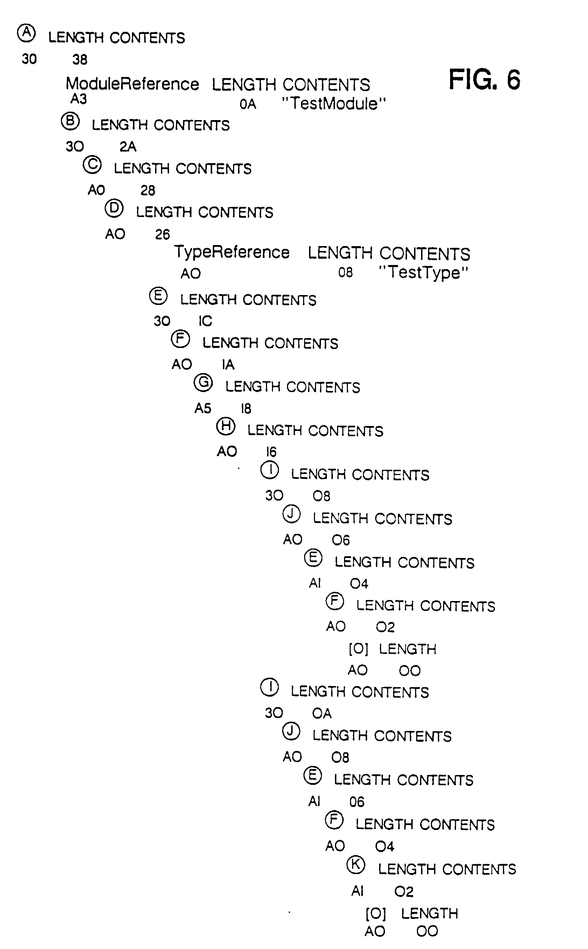

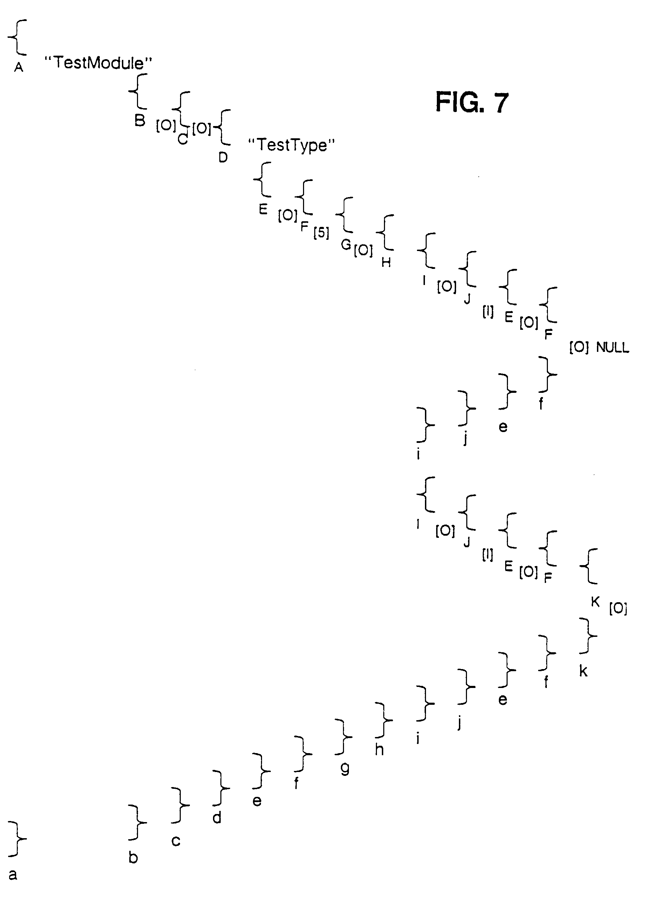

FIG. 4 illustratively depicts the final parse tree structure for the intermediate representation of the high level text representation of TestModule. The set of hexadecimal bytes provided hereinafter represents the intermediate form for this ASN.1 module in hexadecimal form stored linearly in memory. This representation is best understood if viewed in conjunction with illustrative representations of the encoded intermediate form of the afore-described abstract type definitions shown in FIGS. 6 and 7.

| | | | | | | | |
|---|---|---|---|---|---|---|---|
| 30 | 38 | A3 | 0A | 54 | 65 | 73 | 74 |
| 4D | 6F | 64 | 75 | 6C | 65 | A0 | 28 |
| A0 | 26 | A0 | 08 | 54 | 65 | 73 | 74 |
| 54 | 79 | 70 | 65 | 30 | 1C | A0 | 1A |
| A5 | 18 | A0 | 16 | 30 | 08 | A0 | 06 |
| A1 | 04 | A0 | 02 | A0 | 00 | 30 | 0A |
| A0 | 08 | A1 | 06 | A0 | 04 | A1 | 02 |
| A0 | 00 | | | | | | |

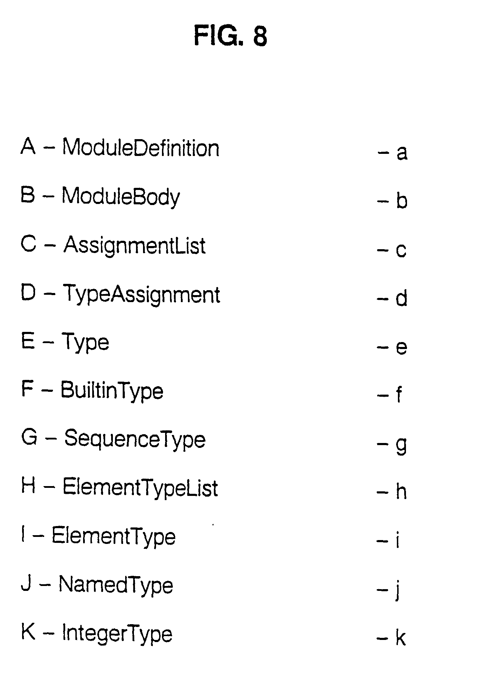

FIG. 6 and 7 represent two different illustrations of the nested relationship of the afore-described high level abstract type definition encoded in the intermediate level hexadecimal form and stored as an ASN.1 BER value. FIG. 6 shows the nested relationship of the ASN.1 BER values (in TLV form). FIG. 7 shows the ordering of the sometimes nested procedure calls and the choices executed at each level of procedure call when an ASN.1 BER value stored in the intermediate form is interpreted in order to execute one of several interpretive functions available to users of the intermediate form. These special functions are described hereinafter. A legend for converting labels (A, B, C,..., a, b, c, etc.) to actual type definition names is provided in FIG. 8. The legend of FIG. 8 provides a means for presenting a clear figure in both FIGS. 6 and 7 and does not represent actual encoded values (called tags) for the types to which they correspond.

Turning now to FIG. 6, the intermediate form of the illustrative set of high level ASN.1 type definitions begins with the tag field corresponding to SEQUENCE since ModuleDefinition is a SEQUENCE (30 hexadecimal or 30H). The length of the contents field (which constitutes the remaining portions of the abstract type definition) is 38H.

The contents field for the abstract type definition begins with the first field of the ModuleDefinition type SEQUENCE. The first field is of type ModuleReference. The tag for this field is A3H, since ModuleReference is of type [3] ASN.1ItemString, and [3], or [CONT 3] translates to A3H. The length of the first field is 10 bytes (0AH) which corresponds to the number of bytes needed to store the machine encoded text form of the module name "TestModule". The contents of this field are the ASCII encoded form of the string "TestModule". The second field is of type ModuleBody. It is a SEQUENCE and has nested inside it one field of type AssignmentList. The tag for this field is A0H since ModuleBody is a SEQUENCE {CHOICE {[0] AssignmentList [1] NULL}} and the Assignmentlist choice has the tag [0] or [CONT 0] associated with it. [CONT 0] translates to A0H. This field is a SEQUENCE of type Assignment and contains several elements nested inside it. In the present illustrative example, the SEQUENCE has only a single element of type TypeAssignment (A0H) and its value field occupies 26H bytes of memory. The first field is occupied by a value of type Typereference (tag is A0H since Typereference ::= [0] ASN1.ItemString) of length 08H and value equal to the ASCII encoded form of the string "TestType". The second field is of type Type, which is a SEQUENCE and hence has a tag 31H, (31H) has a value of length 1CH. The Type field, a SEQUENCE, has nested inside it a value of type BuiltinType (A0H). The tag field for this value is A0H since the value of Type is a SEQUENCE {CHOICE { [0] BuiltinType, [1] DefinedType}} and the BuiltinType value has the tag [0], or [CONT 0] associated with it. [CONT 0] translates to A0H. The BuiltinType value in turn has a value of length 1AH. The BuiltinType has, nested inside it, a value of type SequenceType (A5H) whose value occupies 18H bytes of memory. The tag field for this choice is A5H since BuiltinType is a SEQUENCE {CHOICE [0] BooleanType,..., [5] SequenceType.... }} and the SequenceType value has associated with it the tag [5], or [CONT 5]. [CONT 5] corresponds to the machine encoded hexadecimal value A5H. The SequenceType value has nested inside it a value of type ElementTypeList (A0H) whose value occupies 16H bytes of memory.

In the present example, the value of the ElementTypeList SEQUENCE OF ElementType (BER tag = 30H) contains two fields. Both the fields are of type ElementType. The first field is of length 08H and has nested inside it a value of type NamedType (A0H). The NamedType has nested within it a value of type Type (A1H) and is of length 6 bytes. The Type value has a value of length 04H. The Type value is a SEQUENCE and contains a value of type BuiltinType (A0H) whose value occupies 2 bytes of memory. The BuiltinType has, nested inside it, a value of type BooleanType (A0H) which is NULL.

The second field of the ElementTypeList SEQUENCE has a BER value of length (OAH). Its value is nearly identical to the first element; however, in the second field, the value of the BuiltinType has nested inside it a value of type IntegerType (A1H) and its value occupies two bytes of memory. The value of the IntegerType is a SEQUENCE. In this case, the [0] NULL option of the CHOICE inside the SEQUENCE is selected and this specifies the IntegerType SEQUENCE containing a BER value with a tag field equal to A0H and a length of zero.

Turning now to FIG. 7, the bracketed sequence of procedural calls (indicated by the capital letters), choices of context (indicated by bracketed numbers) and procedural returns (indicated by lower-case letters) is intended to illustrate the program flow of the compiler for building the ASN.1 BER value for the specified ASN.1 module. The choices and names correspond to the Syntax Definitions for the Intermediate Form listed in Table A.

### Description of Interpretive Functions Available Using the Intermediate ASN.1 Abstract Type Definitions

Several previously provided interpretive functions as well as one new interpretive function are executable from the intermediate form of the encoded ASN.1 Abstract Type Definitions. First, a known procedure may be applied to the intermediate form in order to interpret an un-typed bytestring corresponding to the abstract syntax as a set of typed fields and subfields. Second, the value corresponding to an abstract syntax may be organized into typed fields and subfields and displayed as alpha-numeric values on an output device. This is a more human-readable form than the untyped bytestring. Third, known procedures may be applied to verify that a particular encoded value conforms to an abstract syntax. Fourth, it is possible to convert a value obeying one set of encoding rules or transfer syntax into a value obeying another set of encoding rules or transfer syntax. in this case both the values (converted and convertee) conform to the abstract syntax. Fifth, known procedures may be applied to the present invention to generate random or arbitrary values corresponding to the abstract syntax.

The above functions as well as new functions facilitated by the intermediate encoding form of the present invention may be incorporated into an interactive system such as the DEC version of the X.500 directory product. The interpretive functions are compiled directly into the program and are provided to the user in a run-time library in a manner known to those skilled in the art. This method of providing user functions is referred to as a "soft-schema."

In addition to the previously known interpretive functions provided in prior art systems, the present invention provides the ability to interpretively generate the original high level text from the intermediate encoded form of the ASN.1 abstract type definitions. This enables the user to regenerate the original high level text representation of the ASN.1 definitions while an application is being executed on a system. The high level form regenerated from the intermediate level may be viewed by the user, transferred to another encoding system for compiling into another intermediate or low level form, or some other useful function. An advantage provided by this function is that the original form need not be saved in order to provide these functions to a user. As such, excessive space is not consumed in memory (both primary and secondary) by maintaining simultaneously both the high and intermediate forms of encoding. Furthermore, when two separate copies are maintained of the ASN.1 definitions, one for each level, it is possible that changes will be made to one level which will not be carried through to the other level. In such cases, a consistency problem arises which negatively affects the integrity of the stored information. Another advantage to the single form of ASN.1 definition is the assurance that the high level form corresponds to the intermediate form used by the computer, since the regenerated high level form is derived directly from the intermediate form.

### Description of reverse compiling the Intermediate form

Consider the intermediate form for ModuleDefinition consisting of an ASN.1 BER value of type ModuleDefinition. The reverse-compiler analyzes and examines this BER value as described below to generate the corresponding high level text form of the definition.

The reverse compiler contains a set of routines, one routine for each definition listed in the Table A. Each of these routines, when given the corresponding intermediate form, cooperate with one another in order to produce the text corresponding to the intermediate form. These routines shall be referred to hereinafter as Printer routines.

For example, the Printer routine for ModuleDefinition produces the high level ASN.1 text form corresponding to the Intermediate Form for ModuleDefinition. In other words, it prints an ASN.1 module. Each Printer routine analyzes the Intermediate Form value given to it (by its caller) and when necessary, recursively calls another Printer routine.

The description of each Printer routine is provided hereinafter. The Printer routine for ASNlitemstring receives the intermediate form for ASNlitemstring and generates the OCTET STRING value as alpha-numeric text. The Printer routines for Typereference, Identifier, Valuereference, Modulereference, Number, Bstring, Hstring, and Cstring all behave similarly. They receive the intermediate encoded form for each respective type and each of these Printer routines calls the ASNlitemstring Printer routine and pass the received intermediate encoded form to the ASNlitemstring Printer routine.

Next, the ModuleDefinition Printer routine receives as its input the intermediate form (BER value) for ModuleDefinition. As should be realized from the description of the intermediate form, the input thus received is a SEQUENCE value containing two fields: the first field is of type ModuleReference and the second field is of type ModuleBody. The ModuleDefinition Printer routine next performs a series of operations.

First, the ModuleDefinition Printer calls the Modulereference Printer routine and passes the parameter comprising the afore-described first field of the ModuleDefinition SEQUENCE. After control returns to the ModuleDefinition Printer routine, this routine generates the text: "DEFINITIONS ::=", the "newline" character, "BEGIN," and the "newline" character. Next, the ModuleDefinition Printer routine calls the ModuleBody Printer routine and includes as a passed parameter to that Printer routine the afore-described second field of the ModuleDefinition SEQUENCE. After control returns to the ModuleDefinition Printer routine, this routine generates the text, "END". Thereafter, the ModuleDefinition Printer routine is exited and control returns to the calling procedure.

The ModuleBody Printer routine receives the intermediate form for a value of type "ModuleBody." Thus, the input to this routine is a SEQUENCE value with only one field. This Printer routine examines the tag for this field. The tag is either [CONT 0] or [CONT 1]. If the tag equals [CONT 0], then this routine calls the AssignmentList Printer routine and passes the value of this field to the AssignmentList Printer routine. When control passes back to the ModuleBody Printer routine, control passes back to the ModuleBody Printer routine's caller. If the tag is [CONT 1], then no action is taken and control passes back to the caller.

The AssignmentList Printer routine receives the intermediate form for a value of type AssignmentList. Thus, the input is a SEQUENCE OF value with one or more fields. For each field in the SEQUENCE OF structure the AssignmentList Printer routines performs a series of steps. First, the routine generates a "newline" character. Second, the routine calls the Assignment Printer routine and passes as the relevant parameter the field currently being analyzed. After the list has been completely exhausted, control returns to the caller Printer routine.

The Assignment Printer routine receives the intermediate form for a value of type Assignment. Thus, the input is a CHOICE. This routine examines the tag associated with the passed value. The tag must be either [CONT 0] or [CONT 1]. If the tag is [CONT 0], call the Printer routine for Typeassignment and pass the input value to the called routine. If the tag is [CONT 1], call the Printer for Valueassignment with the input value. Upon return of control from either of these two routines, the Assignment Printer routine is exited.

The ExternalTypereference Printer routine receives the intermediate form for a value of type ExternalTypereference. Therefore, the input is a SEQUENCE value containing two fields. The first field is of type Modulereference. The second field is of type Typereference. The ExternalTypereference Printer routine calls the Printer routine for Modulereference. Upon return of control from the called routine, the ExternalTypereference Printer routine prints the character period (.) character. Next, this routine calls the Printer routine for Typereference and passes the second field. When control is returned from the called routine, the ExternalTypereference Printer routine is exited. The ExternalValuereference Printer routine is similar to the ExternalTypereference printer routine. Any differences between these two Printer routines would be known to those of ordinary skill in the art.

The DefinedType Printer routine receives as its input, the intermediate form for a value of type DefinedType. Thus, the input is a SEQUENCE value containing one field. The single field contains a CHOICE. If the tag is [CONT 0], this routine calls the ExternalTypereference Printer routine and passes the single field value. If the tag is [CONT 1], this routine calls the Typereference Printer routine and passes the single field value. Upon return from the called Printer routine, this routine is exited and control returns to the calling routine. The DefinedValue Printer routine is similar to the DefinedType printer routine. Any differences between these two Printer routines would be known to those of ordinary skill in the art.

The Typeassignment Printer routine receives as its input the intermediate form for a value of type Typeassignment. Thus, the input is a SEQUENCE value containing two fields. The first field is of type Typereference. The second field is of type Type. This routine first calls the Typereference Printer routine and passes the first field value. When control returns to this routine the following text characters are generated: " ::= ". Next the Typeassignment Printer routine calls the Type Printer routine and passes the second field value. When control returns from the Type Printer routine, the Typeassignment Printer routine is exited.

The Valueassignment Printer routine receives as its input the intermediate form for a value of type Valueassignment. Thus, the input is a SEQUENCE value containing two fields. The first field is of type Valuereference. The second field is of type SEQUENCE. This SEQUENCE, in turn contains two fields. The first field is of type Type. The second field is of type Value. The Valueassignment Printer routine calls the Valuereference Printer routine and passes the first field value. Upon return of control from the called routine, this routine generates a "blank" character. Next, this routine calls the Type Printer routine and passes the first sub-field value of the second field. Upon return of control from the called routine, this routine generates another "blank" character followed by "::= " and a "newline" character. Next, this routine calls the Value Printer routine and passes the second sub-field value of the second field. Upon return from this routine, the Valueassignment Printer routine is exited.

The Type Printer routine receives as its input the intermediate form for a value of type Type. Thus, the input is a SEQUENCE value having a single field. The single field indicates a tag value for indicating a CHOICE. If the tag is [CONT 0] then this routine calls the BuiltinType Printer routine and passes this field. If the tag is [CONT 1] then this routine calls the DefinedType routine and passes field. Upon return from the called routine, the Type Printer routine is exited.

The BuiltinType Printer routine receives as its input the intermediate form for a value of type BuiltinType. Thus, the input is a SEQUENCE value containing one field. The tag for this field indicates one of the sixteen possible contexts ([CONT 0], [CONT 1] ..... [CONT 15]. Based upon the tag value, the BuiltinType printer routine makes an appropriate call to another Printer routine associated with the indicated tag and passes the field value.

The BuiltinValue Printer routine receives as its input the intermediate form for a value of type BuiltinValue. Thus, the input is a value of type SEQUENCE containing two fields. Only the first field is used during the reverse compilation process. The BuiltinValue Printer routine generates the ASCII string in the value component in the first field of the received intermediate form value of type BuiltinValue. The routine is then exited.

Similar routines are provided for each of the definitions described in Table A. The operation of remaining Printer routines follows directly from the description of the ASN.1 syntax definitions for the intermediate form in Table A and Table B. Thus, it would be a straightforward task for one of ordinary skill in the art to generate appropriate Printer routines in view of the teachings of Table A and Table B.

Thus, a preferred embodiment for the present invention has been described. It should be understood that the present invention is intended to cover all equivalent methods and apparatuses for carrying out the invention as described in the claims.

## Claims

1. An apparatus (6) for converting an Abstract Syntax Notation One (ASN. 1) definition between a high level text form ASN. 1 definition having a plurality of abstract type definitions and an intermediate level encoded form ASN.1 definition that contains said plurality of abstract type definitions comprising :
first memory means (4) for receiving and storing said high level text form ASN.1 definition;
compiler means (10) for converting a high level text form ASN.1 definition to the intermediate level encoded form ASN.1 definition wherein said intermediate level encoded form contains a parse tree representation of said high level text form ASN. 1 definition;
second memory means (4) for receiving and storing said intermediate level encoded form ASN.1 definition;
executing means connected to said second memory means for interpretively executing said intermediate level encoded form ASN.1 definition;
altering means (2) connected to said second memory means for altering said plurality of abstract type definitions contained in said intermediate level encoded form ASN.1 definition, said altering means being responsive to user commands;
said executing means continuing to interpretively execute said intermediate level encoded form ASN.1 definition without recompiling said high level text form ASN. 1 definition after alteration of said plurality of abstract type definitions;
reverse compiler means for analyzing said parse tree representation contained by said intermediate level encoded form ASN.1 definition and converting said intermediate level encoded form ASN. 1 definition into said high level text form ASN. 1 definition; and
bus means for coupling said first memory means, said second memory means, said altering means, said executing means, said compiler means and said reverse compiler means.

2. An apparatus as set forth in claim 1 further comprising:
detecting means for detecting when the conversion from said high level text form ASN.1 definition to said intermediate level encoded form ASN.1 definition is complete; and
discard means responsive to said detecting means for deleting from said first memory means said high level text form ASN.1 definition.

3. A method for converting an Abstract Syntax Notation One (ASN. 1) definition between a high level text form ASN.1 definition having a plurality of abstract type definitions and an intermediate level encoded form ASN. 1 definition that contains said plurality of abstract type definitions, comprising:
receiving the high level text form ASN.1 definition;
storing the received high level text form ASN. 1 definition in a first memory;
converting the high level text form ASN.1 definition to the intermediate level encoded form ASN.1 definition, wherein said intermediate level encoded form contains a parse tree representation of the high level text form ASN.1 definition;
receiving the intermediate level encoded form ASN.1 definition;
storing the received intermediate level encoded form ASN.1 definition in a second memory;
interpretively executing said intermediate level encoded form ASN.1 definition;
altering said plurality of abstract type definitions contained in said intermediate level encoded form ASN.1 definition in response to user commands;
continuing said step of interpretively executing said intermediate level encoded form ASN.1 definition without recompiling said high level encoded form ASN. 1 definition after alteration of said plurality of abstract type definitions;
analyzing said parse tree representation; and
converting, in response to said analyzing said parse tree representation, the intermediate level encoded form ASN. 1 definition into the high level text form ASN.1 definition.

4. A method as set forth in claim 3 further comprising the step of:
deleting from the first memory the high level text form ASN.1 definition after detecting the completion of said converting step.

## Patentansprüche

1. Vorrichtung (6) zum Umwandeln einer Abstrakt-Syntax-Notation-Eins-(ASN.1)-Definition zwischen einer ASN.1-Definition einer Textform auf hoher Ebene mit einer Vielzahl von Definitionen vom abstrakten Typ und einer ASN.1-Definition einer codierten Form auf einer mittleren Ebene, die die Vielzahl von Defintionen vom abstrakten Typ enthält, wobei die Vorrichtung folgendes aufweist:
eine erste Speichereinrichtung (4) zum Empfangen und Speichern der ASN.1-Definition der Textform auf hoher Ebene;
eine Compilereinrichtung (10) zum Umwandeln einer ASN.1-Definition der Textform auf hoher Ebene zu einer ASN.1-Definition der codierten Form auf mittlerer Ebene, wobei die codierte Form auf mittlerer Ebene eine Parserbaumdarstellung der ASN.1-Definition der Textform auf hoher Ebene enthält;
eine zweite Speichereinrichtung (4) zum Empfangen und Speichern der ASN.1-Definition der codierten Form auf mittlerer Ebene;
eine Ausführungseinrichtung, die mit der zweiten Speichereinrichtung verbunden ist, zum interpretierenden Ausführen der ASN.1-Definition der codierten Form auf mittlerer Ebene;
eine Änderungseinrichtung (2), die mit der zweiten Speichereinrichtung verbunden ist, zum Ändern der Vielzahl von Definitionen vom abstrakten Typ, die in der ASN.1-Definition der codierten Form auf mittlerer Ebene enthalten sind, wobei die Änderungseinrichtung auf Anwenderbefehle antwortet;
wobei die Ausführungseinrichtung damit fortfährt, die ASN.1-Definition der codierten Form auf mittlerer Ebene interpretierend auszuführen, ohne die ASN.1-Definition der Textform auf hoher Ebene neu zu compilieren, nach einer Änderung der Vielzahl von Definitionen vom abstrakten Typ;
eine Umkehrungs-Compilereinrichtung zum Analysieren der Parserbaumdarstellung, die durch die ASN.1-Definition der codierten Form auf mittlerer Ebene enthalten ist, und zum Umwandeln der ASN.1-Definition der codierten Form auf mittlerer Ebene in die ASN.1-Definition der Textforrn auf hoher Ebene; und
eine Buseinrichtung zum Koppeln der ersten Speichereinrichtung, der zweiten Speichereinrichtung, der Änderungseinrichtung, der Ausführungseinrichtung, der Compilereinrichtung und der Umkehrungs-Compilereinrichtung.

2. Vorrichtung nach Anspruch 1, die weiterhin folgendes aufweist:
eine Erfassungseinrichtung zum Erfassen, wenn die Umwandlung von der ASN.1-Definition der Textform auf hoher Ebene in die ASN.1-Definition der codierten Form auf mittlerer Ebene beendet ist; und
eine Verwerfungseinrichtung, die auf die Erfassungseinrichtung antwortet, zum Löschen der ASN.1-Definition der Textform auf hoher Ebene von der ersten Speichereinrichtung.

3. Verfahren zum Umwandeln einer Abstrakt-Syntax-Notation-Eins-(ASN.1)-Definition zwischen einer ASN.1-Definition einer Textform auf hoher Ebene mit einer Vielzahl von Definitionen vom abstrakten Typ und einer ASN.1-Definition einer codierten Form auf mittlerer Ebene, die die Vielzahl von Definitionen vom abstrakten Typ enthält, wobei das Verfahren folgendes aufweist:
Empfangen der ASN.1-Definition der Textform auf hoher Ebene;
Speichern der empfangenen ASN.1-Definition der Textform auf hoher Ebene in einem ersten Speicher;
Umwandeln der ASN.1-Definition der Textform auf hoher Ebene in die ASN.1-Definition der codierten Form auf mittlerer Ebene, wobei die codierte Form auf mittlerer Ebene eine Parserbaumdarstellung der ASN.1-Definition der Textform auf hoher Ebene enthält;
Empfangen der ASN.1-Definition der codierten Form auf mittlerer Ebene;
Speichern der empfangenen ASN.1-Definition der codierten Form auf mittlerer Ebene in einem zweiten Speicher;
interpretierendes Ausführen der ASN.1-Definition der codierten Form auf mittlerer Ebene;
Ändern der Vielzahl von Definitionen vom abstrakten Typ, die in der ASN.1-Definition der codierten Form auf mittlerer Ebene enthalten sind, in Antwort auf Anwenderbefehle;
Fortfahren mit dem Schritt zum interpretierenden Ausführen der ASN.1-Definition der codierten Form auf mittlerer Ebene, ohne die ASN.1-Definition der Textform auf hoher Ebene erneut zu compilieren, nach einer Änderung der Vielzahl von Definitionen vom abstrakten Typ;
Analysieren der Parserbaumdarstellung; und
in Antwort auf das Analysieren der Parserbaumdarstellung, Umwandeln der ASN.1-Definition der codierten Form auf mittlerer Ebene in die ASN.1-Definition der Textform auf hoher Ebene.

4. Verfahren nach Anspruch 3, das weiterhin folgenden Schritt aufweist:
Löschen der ASN.1-Definition der Textform auf hoher Ebene aus dem ersten Speicher, nach einem Erfassen des Beendens des Umwandlungsschritts.

## Revendications

1. Appareil (6) pour convertir une définition en notation syntaxique abstraite 1 (ASN.1) entre une définition ASN.1 sous forme de texte de niveau évolué comportant de multiples définitions de types abstraits et une définition ASN.1 sous forme codée de niveau intermédiaire contenant lesdites multiples définitions de types abstraits, comprenant:
un premier moyen formant mémoire (4) destiné à recevoir et à stocker ladite définition ASN.1 sous forme de texte de niveau évolué;
un moyen de compilation (10) destiné à convertir une définition ASN.1 sous forme de texte de niveau évolué en définition ASN.1 sous forme codée de niveau intermédiaire, ladite forme codée de niveau intermédiaire contenant une représentation arborescente d'analyse syntaxique de ladite définition ASN.1 sous forme de texte de niveau évolué;
un second moyen formant mémoire (4) destiné à recevoir et à stocker ladite définition ASN.1 sous forme codée de niveau intermédiaire;
un moyen d'exécution relié audit second moyen formant mémoire pour exécuter de manière interprétative ladite définition ASN.1 sous forme codée de niveau intermédiaire;
un moyen de modification (2) relié audit second moyen formant mémoire pour modifier lesdites multiples définitions de types abstraits contenues dans ladite définition ASN.1 sous forme codée de niveau intermédiaire, ledit moyen de modification étant sensible à des instructions d'un utilisateur;
ledit moyen d'exécution continuant à exécuter de manière interprétative ladite définition ASN.1 sous forme codée de niveau intermédiaire sans recompiler ladite définition ASN.1 sous forme de texte de niveau évolué après modification desdites multiples définitions de types abstraits;
un moyen de compilation inverse destiné à analyser ladite représentation arborescente d'analyse syntaxique contenue dans la définition ASN.1 sous forme codée de niveau intermédiaire et à convertir celle-ci en définition ASN.1 sous forme de texte de niveau évolué; et
un moyen formant bus pour relier ledit premier moyen formant mémoire, ledit second moyen formant mémoire, ledit moyen de modification, ledit moyen d'exécution, ledit moyen de compilation et ledit moyen de compilation inverse.

2. Appareil tel que défini dans la revendication 1, comprenant en outre :
un moyen de détection destiné à détecter lorsque la conversion de ladite définition ASN.1 sous forme de texte de niveau évolué dans ladite définition ASN.1 sous forme codée de niveau intermédiaire est terminée; et
un moyen de suppression sensible audit moyen de détection pour supprimer dudit premier moyen formant mémoire ladite définition ASN.1 sous forme de texte de niveau évolué.

3. Méthode de conversion d'une définition en notation syntaxique abstraite 1 (ASN.1) entre une définition ASN.1 sous forme de texte de niveau évolué comportant de multiples définitions de types abstraits et une définition ASN.1 sous forme codée de niveau intermédiaire contenant lesdites multiples définitions de types abstraits, comprenant :
la réception de la définition ASN.1 sous forme de texte de niveau évolué;
le stockage de la définition ASN.1 sous forme de texte de niveau évolué reçue dans une première mémoire;
la conversion de la définition ASN.1 sous forme de texte de niveau évolué en définition ASN.1 sous forme codée de niveau intermédiaire, ladite forme codée de niveau intermédiaire contenant une représentation arborescente d'analyse syntaxique de la définition ASN.1 sous forme de texte de niveau évolué;
la réception de la définition ASN.1 sous forme codée de niveau intermédiaire;
le stockage de la définition ASN.1 sous forme codée de niveau intermédiaire reçue dans une seconde mémoire;
l'exécution interprétative de ladite définition ASN.1 sous forme codée de niveau intermédiaire;
la modification desdites multiples définitions de types abstraits contenues dans ladite définition ASN.1 sous forme codée de niveau intermédiaire en réponse à des instructions d'un utilisateur;
la continuation de ladite étape d'exécution interprétative de ladite définition ASN.1 sous forme codée de niveau intermédiaire sans recompilation de ladite définition ASN.1 sous forme codée de niveau évolué après la modification desdites multiples définitions de types abstraits;
l'analyse de ladite représentation arborescente d'analyse syntaxique; et
la conversion, en réponse à ladite analyse de ladite représentation arborescente d'analyse syntaxique, de la définition ASN.1 sous forme codée de niveau intermédiaire en définition ASN.1 sous forme de texte de niveau évolué.

4. Méthode telle que définie dans la revendication 3, comprenant en outre l'étape de :
suppression de la définition ASN.1 sous forme de texte de niveau évolué de la première mémoire après détection de l'achèvement de ladite étape de conversion.
